# EUROPÄISCHE PATENTANMELDUNG

(11) **EP 1 754 904 A2**
(43) Veröffentlichungstag der Anmeldung: **21.02.2007**
(21) Anmeldenummer: 06016075.1
(22) Anmeldetag: 02.08.2006
(51) Int. Cl.: F16D 13/64, F16D 13/72

(54) **Kopplungsvorrichtung**

(30) Priorität: 19.08.2005 DE 102005039273
(71) Anmelder: ZF FRIEDRICHSHAFEN AG, 88046 Friedrichshafen (DE)
(72) Erfinder: Schröder, Arthur, 97456 Dittelbrunn (DE); Lotze, Rüdiger, 97424 Schweinfurt (DE); Sudau, Jörg, 97464 Niederwerrn (DE); Fischer, Stefan, 73760 Ostfildern (DE); Heinzel, Markus, 73072 Donzdorf (DE); Kandert, Dieter, 75446 Wiernsheim (DE); Neft, Klaus, 73655 Plüderhausen (DE)

(57) **Zusammenfassung**

Eine Kopplungsvorrichtung (3) weist ein mit einem Antrieb (11) verbundenes Gehäuse (5), einen Abtrieb (18), der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung (98) auf, die als Kupplungsorgane wenigstens über ein Anpressmittel und über mindestens ein durch das Anpressmittel (80) beaufschlagbares Kupplungselement (22) verfügt, das ebenso wie das Anpressmittel in Achsrichtung begrenzt verlagerbar ist und wenigstens eine Reibfläche und eine mit dem Abtrieb in Wirkverbindung stehende Kupplungsnabe (40) aufweist. Beginnend in einem zwischen Einrückposition und Ausrückposition liegenden Berührabschnitt bis zum Erreichen der Einrückposition ist ein Drehmoment des Antriebs über das Gehäuse und die Reibungskupplung auf den Abtrieb übertragbar, während jenseits des Berührabschnittes bis zur Ausrückposition diese Drehmomentübertragung aufgehoben ist. Dem Anpressmittel ist eine dasselbe in Richtung der Ausrückposition beaufschlagende Ausrück-Unterstützungsanordnung (52) und gegebenenfalls eine das Anpressmittel vom Kupplungselement trennende Momenten-Aufbauanordnung (56) zugeordnet.

## Beschreibung

Die vorliegende Erfindung betrifft eine Kopplungsvorrichtung, aufweisend ein mit einem Antrieb verbundenes Gehäuse, einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung, die als Kupplungsorgane wenigstens über ein Anpressmittel und über mindestens ein durch das Anpressmittel beaufschlagbares Kupplungselement verfügt, das ebenso wie das Anpressmittel in Achsrichtung begrenzt verlagerbar ist und wenigstens eine Reibfläche und eine mit dem Abtrieb in Wirkverbindung stehende Kupplungsnabe aufweist, wobei beginnend in einem zwischen Einrückposition und Ausrückposition liegenden Berührabschnitt bis zum Erreichen der Einrückposition ein Drehmoment des Antriebs über das Gehäuse und die Reibungskupplung auf den Abtrieb übertragbar ist, während jenseits des Berührabschnittes bis zur Ausrückposition diese Drehmomentübertragung aufgehoben ist.

Eine derartige Kopplungsvorrichtung ist aus der DE 102 34 822 A1 bekannt. Bei einer in dieser Druckschrift gezeigten Ausführungsform ist das Anpressmittel durch einen Kolben gebildet, der auf eine Reibungskupplung, gebildet durch eine Mehrzahl von Kupplungselementen in Form von Lamellen, einwirkt. Die Kupplungselemente sind zur Kühlung in einem Kühlraum angeordnet, der über einen Zufluß und einen Abfluß mit einer externen Fluiddruckquelle in Verbindung steht, und durch den Kolben von einem sowohl bezüglich seines Volumens als auch bezüglich seiner radialen Erstreckung erheblich kleineren Druckraum getrennt ist, wobei der letztgenannte über eine Steuerleitung, die in dem als Getriebeeingangswelle ausgebildeten Abtrieb vorgesehen ist, mit Druck beaufschlagt werden kann. Bei einem Überdruck im Druckraum gegenüber dem Kühlraum wird der Kolben in Richtung des letztgenannten bewegt und damit die Reibungskupplung eingerückt, während nach einer Druckreduzierung im Druckraum über die Steuerleitung unter das Druckniveau des Kühlraumes der Kolben in Gegenrichtung und damit die Reibungskupplung ausgerückt wird.

Diese rein druckabhängige Verlagerung des Kolbens zwischen seiner Ein- und seiner Ausrückposition mag in der Mehrzahl der Betriebszustände zu einem ordentlichen Ergebnis führen, jedoch muss bei einer derartigen Kopplungsvorrichtung bei bestimmten Betriebszuständen mit unerwünschten Reaktionen gerechnet werden, die nachfolgend erläutert sind.

Nach Abschalten des Antriebs der Kopplungsvorrichtung, insbesondere in betriebswarmem Zustand und/oder bei an einer Steigung abgestelltem Fahrzeug, kann sich die Menge des im Kühlraum enthaltenen Fluids deutlich reduzieren, so dass sich bei einem Neustart des Antriebs aufgrund der zunächst unzureichenden Menge an Fluid im Kühlraum ein Überdruck im Druckraum aufbauen kann, der zu einem Einrücken des Kolbens und damit zu einer unerwünschten Momentenübertragung in der Kopplungsvorrichtung führt. Dadurch sind gefährliche Situationen vorbestimmt, wenn die Getriebesteuerung des Fahrzeugs bei einem Startvorgang einen Fahrgang einlegt, und das Fahrzeug sich somit ohne Fahrerwunsch in Bewegung setzt. Dieses grundsätzliche Problem wird weiter verstärkt, wenn der Neustart bei kalter Umgebung und daher mit zähflüssigem Fluid erfolgt, wodurch sich die benötige Befüllung des Kühlraums verzögert. Ebenfalls verstärkt wird dieses Problem, wenn der Neustart fahrerseitig mit hoher Drehzahl erfolgt, bei welcher das im Kühlraum vorhandene Fluid fliehkraftbedingt nach radial außen geschleudert wird, so dass im Radialbereich des Kolbens nahezu kein Druckaufbau im Kühlraum erfolgen kann. Im radial kleineren Druckraum staut sich das Fluid dagegen im radialen Außenbereich des Kolbens auf, so dass dort Druck aufgebaut wird.

Ein weiteres Problem ergibt sich bei der bekannten Kopplungsvorrichtung beim geregelten Einrücken. In der Ausrückposition widersetzt sich der Kolben zunächst reibungsbedingt einem Druckanstieg im Druckraum, um dann schlagartig in Richtung des Kühlraums ausgelenkt zu werden, so dass ein ruckbehaftetes Einrücken schwer auszuschließen ist, zumal bis zum Erreichen des durch den Beginn einer Momentenübertragung erkennbaren Berührabschnittes keine Zuordnung eines in der Steuerleitung angelegten Druckes zur jeweiligen Kolbenposition möglich ist.

Schließlich besteht zwischen dem Berührabschnitt und der Einrückposition das Problem, dass der unelastische Kolben mit ebenfalls unelastischen Reibflächen der Reibungskupplung in Wirkverbindung gelangt, und demnach ein sehr kurzer Einrückweg für den Aufbau der Momentenübertragung, Modulation genannt, zur Verfügung steht. Auch hierdurch gestaltet sich das Einrücken relativ hart und stoßbehaftet. Außerdem wirken sich radiale und/oder axiale Toleranzen zwischen den Kupplungselementen ebenso wie eine eventuelle Welligkeit der Reibflächen in Umfangsrichtung nachteilig auf den Nutzungsgrad der jeweils vorhandenen Reibflächen für die Momentenübertragung aus, was sich in partiell erhöhten Flächenpressungen äußert.

Der Erfindung liegt die Aufgabe zugrunde, eine Kopplungsvorrichtung derart auszubilden, dass diese zum einen Sicherheit gegen ein unbeabsichtigtes Einrücken bietet, und zum anderen eine exakt beeinflussbare Einrückbewegung vollzieht.

Weiterhin liegt der Erfindung die Aufgabe zugrunde, nachteilige Einflüsse von Toleranzen und Welligkeiten auszuschließen, und zudem das Einrücken weich und gleichförmig zu gestalten.

Durch Zuordnung einer Ausrück-Unterstützungsanordnung zu einem mit Vorzug als Kolben ausgebildeten Anpressmittel einer Kopplungsvorrichtung wird, bei das Anpreßmittel in Richtung der Ausrückposition beaufschlagender Ausrück-Unterstützungsanordnung, eine Axialkraft auf das Anpreßmittel ausgeübt, durch welche dieses von mindestens eine Kupplungselement einer Reibungskupplung fortgedrückt wird. Bei hinreichend großer durch die Ausrück-Unterstützungsanordnung ausgeübter Axialkraft ist bei einem Startvorgang unabhängig von den sich beim vorangehenden Stillstand eingestellten Befüllungsgraden in einem Druckraum und einem Kühlraum sowie, dadurch bedingt, einer den Befüllungsgraden zugeordneten Druckdifferenz zwischen dem Druckraum und dem Kühlraum, sichergestellt, dass das Anpreßmittel beabstandet zur Reibungskupplung gehalten und damit der Aufbau einer unerwünschten Drehmomentübertragung wirksam verhindert wird. Idealerweise ist die von der Ausrück-Unterstützungsanordnung ausgeübte Axialkraft derart bemessen, dass das Anpressmittel auch unter ungünstigsten Einflüssen, wie bei einem Neustart bei kalter Umgebung und daher zähflüssigem Kühlfluid, beim Abstellen eines die Kopplungsvorrichtung beinhaltenden Fahrzeugs an einer Steigung und/oder bei einem Start mit fahrerseitig angeforderter hoher Drehzahl, stabil in seiner Ausrückposition gehalten ist. Von Vorteil ist eine derartige Ausführung aber auch dann, wenn aufgrund eines störungsbedingten Druckabfalles im entsprechenden Versorgungssystem der Kopplungsvorrichtung die Ausrück-Unterstützungsanordnung dafür sogt, dass das Anpreßmittel in einem Bereich zwischen Ausrückposition und Berührabschnitt, mit besonderem Vorzug sogar unmittelbar in der Ausrückposition gehalten ist, und damit eine unerwünschte Momentenübertragung, die bei eingelegtem Fahrgang zu einem Anrollen des Fahrzeugs führen kann, vermieden wird.

Unter diesen Bedingungen erfolgt eine Auslenkung des Anpressmittels aus seiner Ausrückposition somit nur dann, wenn im Druckraum ein beträchtlich höherer Druck anliegt als im Kühlraum, da sowohl die durch den Druck im Kühlraum bedingte Axialkraft als auch die gleichwirkend zu derselben von der Ausrück-Unterstützungsanordnung ausgeübte Axialkraft überwunden werden muss. Dies wird nur dann der Fall sein, wenn über eine dem Druckraum zugeordnete Steuerleitung ein Überdruck im Druckraum angelegt wird, welcher die beiden vorgenannten Axialkräfte betragsmäßig übersteigt.

Sobald ein derartiger Überdruck im Druckraum aufgebaut ist, setzt eine Verlagerungsbewegung des Anpressmittels in Richtung der Einrückposition ein. Ist hierbei die Ausrück-Unterstützungsanordnung mit einem Axialkraftspeicher versehen, so wird dieser infolge der Verlagerungsbewegung des Anpressmittels immer weiter verformt, wobei der von diesem Axialkraftspeicher dem Anpreßmittel entgegengesetzte Widerstand entsprechend zunimmt. Aufgrund dieser Situation hat eine bestimmte Druckänderung Δp im Druckraum immer eine zugeordnete Axialkraftänderung Δf auf das Anpreßmittel zur Folge, wobei diese Axialkraftänderung Δf eine Wegänderung Δs an dem Anpreßmittel auslöst. Hierdurch bedingt, ergibt sich eine exakte Zuordnung des jeweils im Druckraum angelegten Überdruckes gegenüber dem im Kühlraum vorherrschenden Druck in Relation zu der vom Anpreßmittel zurückgelegten Wegänderung Δs, so dass die jeweilige Position des Anpreßmittels stets aus der vorgenannten Druckdifferenz zwischen Druck- und Kühlraum hergeleitet werden kann und dadurch der Einrückvorgang entsprechend feinfühlig steuerbar ist. Dies ist insbesondere im Bereich zwischen dem Berührabschnitt, an welchem eine erstmalige Kontaktaufnahme zwischen Anpressmittel und Reibungskupplung zum Aufbau einer Drehmomentübertragung erfolgt, und der Einrückposition, in welcher der Aufbau der Drehmomentübertragung abgeschlossen ist, wichtig, da in diesem Bereich zugunsten eines weichen und gleichförmigen Einrückens eine gezielte Steuerung und/oder Regelung des Anpreßmittels von besonderer Bedeutung ist. Im Gegensatz dazu kann der Bereich zwischen der Ausrückposition und dem Berührabschnitt vergleichsweise schnell durchfahren werden, da innerhalb dieses Bereiches noch keine Drehmomentübertragung erfolgt.

Hinzu kommt, dass aufgrund der zur Überwindung des von der Ausrück-Unterstützungsanordnung ausgeübten Axialkraft notwendigen beträchtlichen Überdruckes im Druckraum gegenüber dem Kühlraum die Reibungskraft, die ein Verharren des Anpreßmittels in seiner ursprünglichen Position begünstigt, problemlos überwunden wird, so dass das Anpreßmittel bei seiner Verlagerungsbewegung aus der Ausrückposition heraus von Beginn an eine im wesentlichen ruckfreie Bewegung auszuführen vermag.

Zurückkommend auf die Ausführung der Ausrück-Unterstützungsanordnung mit einem Axialkraftspeicher, ist dieser vorzugsweise mit degressiver Kennlinie ausgelegt. Bei entsprechender Auswahl des genutzten Kennlinienbereiches steigt der von diesem Axialkraftspeicher ausgeübte, einer Verlagerungsbewegung des Anpreßmittels entgegenwirkende Widerstand, ausgehend von der Ausrückposition, in Richtung zum Berührabschnitt immer weiter an, um unmittelbar im Erstreckungsbereich des Berührabschnittes oder zumindest in unmittelbarer Nachbarschaft desselben in einem der Maximalkraft zugeordneten Plateau zu münden. Idealerweise ist dieser Kennlinienbereich derart ausgewählt, dass der dem Anpreßmittel entgegenwirkende Widerstand und damit die von dem Axialkraftspeicher ausgeübte Anpreßkraft nach Durchgang dieses Plateaus, also bei weitergehender Verlagerungsbewegung des Anpreßmittels in Richtung zur Einrückposition, immer weiter absinkt, und dadurch immer weniger der sich gleichzeitig aufbauenden Drehmomentübertragung entgegenwirkt. Es ist für eine optimale Funktionsweise bei Auswahl dieses Kennlinienbereiches allerdings für eine enge Begrenzung der Toleranzen im Bereich der Reibungskupplung zu sorgen, da bereits kleinere Verlagerungen des Berührabschnittes in Achsrichtung eine deutliche Änderung hinsichtlich der Wirkung des Axialkraftspeichers gegenüber dem Anpreßmittel auslösen.

Sofern eine derart enge Begrenzung der Toleranzen im Bereich der Reibungskupplung nicht möglich oder aber nicht angestrebt ist, kann mit Vorteil auch ein anderer Kennlinienbereich mit progressiver Kennlinie oder aber eine zumindest im wesentlichen lineare Kennlinie des Axialkraftspeichers ausgewählt sein, so dass der vom Axialkraftspeicher gegenüber dem Anpreßmittel ausgeübte, einer Verlagerungsbewegung desselben entgegenwirkende Widerstand, ausgehend von der Ausrückposition, nicht nur bis zum Berührabschnitt, sondern auch darüber hinaus, immer weiter ansteigt. Allerdings wirkt der Axialkraftspeicher dann auch zwischen dem Berührabschnitt und der Einrückposition dem Anstieg der Drehmomentübertragung mit zunehmender Axialkraft entgegen. Besonders vorteilhaft bei Auswahl eines derartigen Kennlinienbereiches bei einer progressiven Kennlinie ist, dass, ausgehend von der Ausrückposition, mit zunehmender Annäherung an den Berührabschnitt eine immer stärkere Druckänderung Δp im Druckraum und damit eine immer stärkere Axialkraftänderung Δf am Anpreßmittel eine immer kleinere Wegänderung As, also einen immer weiter absinkenden Weggradienten, an dem Anpreßmittel auslöst. Dadurch ergibt sich eine besonders feinfühlige Beeinflussung der axialen Position des Anpreßmittels, was insbesondere im Axialbereich zwischen dem Berührabschnitt und der Einrückposition zugunsten eines weichen und gleichförmigen Aufbaus der Drehmomentübertragung von besonderer Bedeutung ist.

Als Axialkraftspeicher mit zumindest im wesentlichen linear ansteigender Kennlinie bieten sich Tellerfedern mit großem Anteil an Federzungen ebenso an wie Schraubendruckfedern oder Blattfedern, als Axialkraftspeicher mit progressiver Kennlinie dagegen Tellerfedern.

Als weiterer Vorteil des Axialkraftspeichers der Ausrück-Unterstützungsanordnung ist zu vermerken, dass ungeachtet der jeweiligen Kennlinie eine Verlagerungsbewegung des Anpreßmittels in dessen Ausrückposition unterstützt und dadurch der Ausrückvorgang beschleunigt wird.

Bei Zuordnung einer Momenten-Aufbauanordnung zu dem Anpressmittel kann das Modulieren, also das Steuern und/oder Regeln des Einrückvorganges und damit der Aufbau der Momentenübertragung zwischen dem Berührabschnitt und der Einrückposition besonders gleichförmig und weich erfolgen, insbesondere bei Ausbildung der Momenten-Aufbauanordnung mit einem als Anlegefeder dienenden Axialkraftspeicher, wodurch zusätzliche Elastizität zwischen das Anpreßmittel und das zumindest eine Kupplungselement der Reibungskupplung eingebracht wird. Hierdurch wird für ein besseres Anschmiegen der einzelnen Kontaktflächen der Kupplungsorgane, wie Anpreßmittel und Kupplungselement oder mehrerer Kupplungselemente zueinander, gesorgt. Dadurch können nicht nur axiale und/oder radiale Toleranzen zwischen den einzelnen Kupplungsorganen besser ausgeglichen werden, sondern auch eine eventuell vorhandene Welligkeit im Bereich von Reibbelägen und oder Reibflächen der Kupplungselemente.

Mit Vorzug ist die Momenten-Aufbauanordnung für eine erheblich geringere Anpreßkraft ausgelegt als das Anpreßmittel, so dass nach Kontaktherstellung der Momenten-Aufbauanordnung mit dem Kupplungselement bei fortgesetztem Einrückvorgang zunächst die Momenten-Aufbauanordnung eine Verformung erfährt, bis die der Momenten-Aufbauanordnung zugeordnete Axialkraft erreicht ist, und anschließend wird bei weiter fortgesetztem Einrückvorgang das Anpreßmittel selbst mit dem Kupplungselement in Wirkverbindung gebracht, um danach durch eine weitere Belastung in Richtung zur Einrückposition die Drehmomentübertragung bis auf das vorgegebene Maß zu steigern.

Im folgenden wird ein Ausführungsbeispiel der Erfindung anhand einer Zeichnung näher erläutert. Es zeigt:
- Fig. 1: die obere Hälfte eines Längsschnittes durch eine Kopplungsvorrichtung mit einer Ausrück-Unterstützungsvorrichtung und mit einer Momenten-Aufbauanordnung;
- Fig. 2: bevorzugte Kennlinienbereiche eines Axialkraftspeichers der Ausrück-Unterstützungsvorrichtung.

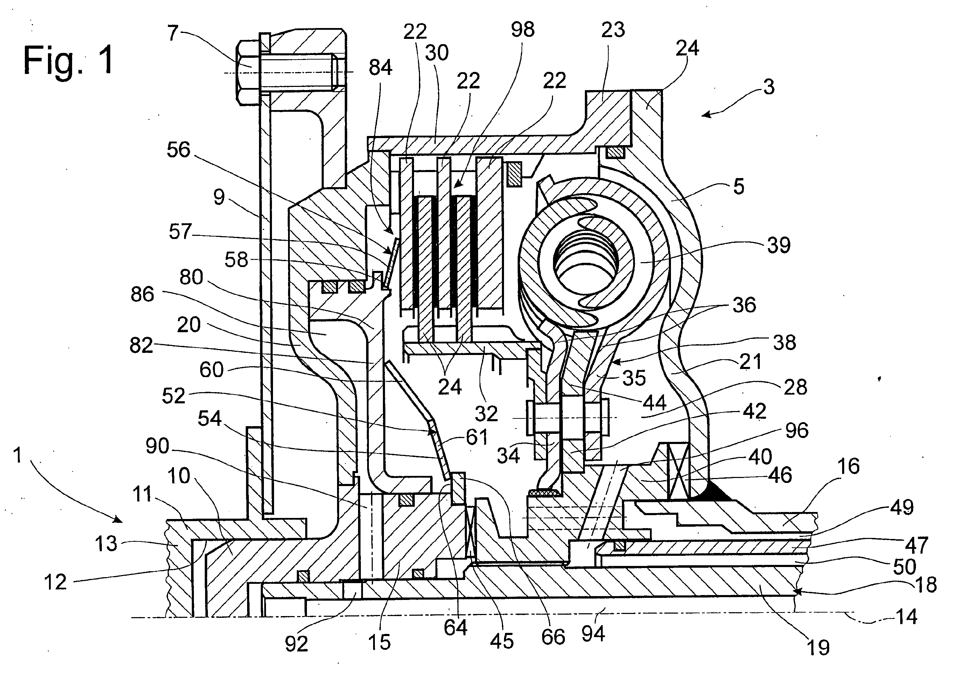

In Fig. 1 ist ein Antriebsstrang 1 mit einer erfindungsgemäßen Kopplungsvorrichtung 3 schematisch dargestellt. Die Kopplungsvorrichtung 3 umfasst ein Gehäuse 5, das über eine Mehrzahl von Befestigungselementen 7 und ein Kopplungselement 9, wie z.B. eine Flexplatte, mit einem Antrieb 11, beispielsweise der Kurbelwelle 13 einer Brennkraftmaschine, zur gemeinsamen Drehung gekoppelt werden kann und im Bereich einer Drehachse 14 einen an einer antriebsseitigen Gehäusenabe 15 vorgesehenen Lagerzapfen 10 aufweist, der in einer am Antrieb 11 ausgebildeten Zentrierführung 12 aufgenommen ist. An der vom Antrieb 11 entfernt liegenden Axialseite weist das Gehäuse 5 eine abtriebsseitige Gehäusenabe 16 auf, die beispielsweise mit einer nicht gezeigten Getriebeanordnung verbunden ist und dort eine ebenfalls nicht gezeigte Fluidförderpumpe zur Drehung antreibt. Zur abtriebsseitigen Gehäusenabe 16 konzentrisch angeordnet ist ein Abtrieb 18, der mit seinem freien Ende aus dem Gehäuse 5 ragt. Dieser Abtrieb 18 kann beispielsweise durch eine Getriebeeingangswelle 19 gebildet sein.

Das Gehäuse 5 weist eine sich von der antriebsseitigen Gehäusenabe 15 aus im Wesentlichen nach radial außen erstreckende antriebsseitige Gehäusewandung 20 und eine sich von der abtriebsseitigen Gehäusenabe 16 aus im Wesentlichen nach radial außen erstreckende abtriebsseitige Gehäusewandung 21 auf. Diese beiden Gehäusewandungen 20, 21 gehen jeweils im radial äußeren Bereich in Gehäuseaußenschalen 23, 24 über, durch welche die beiden Gehäusewandungen 20, 21 axial miteinander verbunden sind und die in nicht gezeigter Weise druckdicht aneinander befestigt sind, um einen Verlust an Fluid aus einem von den Gehäusewandungen 20, 21 und den Gehäuseaußenschalen 23, 24 umschlossenen Kühlraum 28 zu verhindern.

Im Kühlraum 28 des Gehäuses 5 ist eine Mehrzahl von ersten Kupplungselementen 22, welche mit dem Gehäuse 5 und hierbei insbesondere mit dessen als antriebsseitiger Kupplungselemententräger 30 wirksamen Gehäuseaußenschale 23 zur gemeinsamen Drehung gekoppelt sind, sowie eine Mehrzahl von zweiten Kupplungselementen 24, welche an einem abtriebsseitigen Kupplungselemententräger 32 drehfest aufgenommen sind, zur Bildung einer Reibungskupplung 98 enthalten. Der abtriebsseitige Kupplungselemententräger 32 stützt sich radial über ein erstes Deckblech 34 eines Torsionsschwingungsdämpfers 38 an einer Kupplungsnabe 40 des Torsionsschwingungsdämpfers 38 ab, wobei das erste Deckblech 34 gemeinsam mit einem zweiten Deckblech 35 einen Eingangsteil 36 des Torsionsschwingungsdämpfers 38 bildet. Der Eingangsteil 36 ist gegen die Wirkung von Energiespeichern 39 gegenüber einem Ausgangsteil 42 in Form einer Nabenscheibe 44 relativ drehbar, wobei die Nabenscheibe 44 drehfest an der Kupplungsnabe 40 befestigt ist. Die Kupplungsnabe 40 ihrerseits ist sowohl an der abtriebsseitigen Gehäusenabe 16 als auch auf einer radial zwischen dieser Gehäusenabe 16 und dem Abtrieb 18 angeordneten Stützwelle 47 zentriert und mit dem Abtrieb 18 zur gemeinsamen Drehung gekoppelt. Die Stützwelle 47 begrenzt mit der abtriebsseitigen Gehäusenabe 16 einen ersten ringförmigen Kanal 49, mit dem Abtrieb 18 dagegen einen zweiten ringförmigen Kanal 50.

Die Kupplungsnabe 40 ist durch eine erste Axiallagerung 45 gegenüber der antriebsseitigen Gehäusenabe 15 und durch eine zweite Axiallagerung 46 gegenüber der abtriebsseitigen Gehäusenabe 16 innerhalb des Gehäuses 5 positioniert.

Die antriebsseitige Gehäusenabe 15 nimmt, axial zwischen der antriebsseitigen Gehäusewandung 20 und der Kupplungsnabe 40, ein Anpressmittel 80 auf, wobei dieses Anpressmittel 80 als Kolben 82 ausgebildet und über eine Momenten-Aufbauanordnung 56 in Form eines Axialkraftspeichers 57 mit dem benachbarten Kupplungselement 22 in Wirkverbindung bringbar ist. Die Momenten-Aufbauanordnung 56 stützt sich einerseits an einer umlaufenden Sicke 58 des Anpreßmittels 80 und andererseits an der ihm zugewandten Seite des benachbarten Kupplungselementes 22 ab.

Das Anpreßmittel 80 ist ebenso wie jedes der Kupplungselemente 22, 24 als Kupplungsorgan 84 der Reibungskupplung 98 wirksam. An dem Anpreßmittel 80 kommt, radial innerhalb der Kupplungselemente 22, 24, eine Ausrück-Unterstützungsanordnung 52 in Form eines Axialkraftspeichers 54 zur Anlage, wobei der Axialkraftspeicher 54 als Tellerfeder 62 mit einem ringfömigen Grundfederteil 61 und mit Federzungen 60 ausgebildet ist. Während sich der Axialkraftspeicher 54 einerseits mit seinen Federzungen 60 am Anpreßmittel 80 in Anlage befindet, stützt er sich mit seinem Grundfederkörper 61 andererseits an einer Stützfläche 64 eines an der antriebsseitigen Gehäusenabe 15 fest vorgesehenen Bauteils 66 in Form eines Radialvorsprunges ab. Durch die Ausrück-Unterstützungsanordnung 52 wird das Anpreßmittel 80 in Richtung zur antriebsseitigen Gehäusewandung 20 beaufschlagt.

Das Anpressmittel 80 ist axial zwischen der antriebsseitigen Gehäusewandung 20 und dem Kühlraum 28 angeordnet und begrenzt gemeinsam mit der antriebsseitigen Gehäusewandung 20 einen Druckraum 86, der über Strömungsdurchlässe 90 in der antriebsseitigen Gehäusenabe 15 sowie über Strömungsdurchlässe 92 im Abtrieb 18, also in der Getriebeeingangswelle 19, mit einer als Steuerleitung 94 dienenden Mittenbohrung der Getriebeeingangswelle 19 verbunden ist. Weiterhin sind Strömungsdurchgänge 96 in der Kupplungsnabe 40 vorgesehen, durch welche eine Strömungsverbindung zwischen dem Kanal 50 und dem Kühlraum 28 herstellbar ist. Der letztgenannte ist gegenüber dem Druckraum 86 abgedichtet, ebenso wie die Getriebeeingangswelle 19 gegenüber der antriebsseitigen Gehäusenabe 15 und die Kupplungsnabe 40 gegenüber dem ersten Deckblech 34 des Torsionsschwingungsdämpfers 38 sowie gegenüber der Stützwelle 47. Durch die Abdichtungen soll vermieden werden, dass von einer vom Kanal 50 über die Strömungsdurchgänge 96 in den Kühlraum 28 geleiteten Strömung erhebliche Strömungsanteile entweder über den Torsionsschwingungsdämpfer 38 in den Kanal 49 oder direkt vom Kanal 50 in den Kanal 49 gelangen kann, ohne zuvor die Kupplungselemente 22 und 24 zur Kühlung erreicht zu haben. Im Gegensatz dazu wird durch die Abdichtungen zwischen Getriebeeingangswelle 19 und antriebsseitiger Gehäusenabe 15 vermieden, dass Fluid, das zur Druckbeaufschlagung des Druckraumes 86 vorgesehen ist und diesem über die Steuerleitung 94 in der Getriebeeingangswelle 19 sowie über die Strömungsdurchlässe 90, 92 zugeleitet wird, in den Kühlraum 28 absickem kann.

Gemäß Fig. 1 befindet sich das Anpressmittel 80 in seiner Ausrückposition, in welcher die Kupplungselemente 22, 24 entlastet und daher nicht zur Übertragung eines vom Antrieb 11 stammenden und auf das Gehäuse 5 geleiteten Drehmomentes auf den Abtrieb 18 befähigt sind. Durch Aufbau eines Überdruckes im Druckraum 86 gegenüber dem Kühlraum 28 wird das Anpressmittel 80 gegen die Wirkung des Axialkraftspeichers 54 der Ausrück-Unterstützungsanordnung 52 und unter Verformung des Axialkraftspeichers 58 der Momenten-Aufbauanordnung 56, in Richtung zu den Kupplungselementen 22, 24 axial verlagert. Zuerst wird bei dieser Veriagerungsbewegung des Anpreßmittels 80 der Berührabschnitt erreicht, in welchem die Momenten-Aufbauanordnung 56 zwar mit einer geringen Anpreßkraft auf das benachbarte Kupplungselement 22 einwirkt, diese Anpreßkraft aber nicht genügt, um die Kupplungselemente 22, 24 in eine für eine Drehmomentübertragung ausreichende Wirkverbindung miteinander zu bringen. Bei weiterem Druckaufbau im Druckraum 86 wird ein zunehmend stärkeres Anpressen des Druckmittels 80 gegen das benachbarte Kupplungselement 22 und, über dieses, gegen die übrigen Kupplungselemente 22, 24 ausgelöst, so dass die letztgenannten immer stärker gegeneinander gepreßt werden, da eine Ausweichbewegung dieser Kupplungselemente in Richtung zur abtriebsseitigen Gehäusewandung 21 durch das derselben am nächsten kommende letzte Kupplungselement 22, das ortsfest an der Gehäuseaußenschale 25 aufgenommen ist, unterbunden wird. Bei fortgesetzter Zunahme der vom Anpressmittel 80 auf die Kupplungselemente 22, 24 ausgeübten Anpreßkraft beginnt die Drehmomentübertragung, während dann, wenn das Anpressmittel 80 seine Einrückposition erreicht hat und seine Veriagerungsbewegung beendet ist, die Kupplungselemente 22, 24 mit einer vorbestimmten Axialkraft gegeneinander gepreßt werden, in welcher die maximale Drehmomentübertragung möglich ist. Es bleibt hinzuzufügen, dass ab einer vorbestimmten Position des Anpreßmittels 80, vorzugsweise in einem Axialbereich zwischen dem Berührabschnitt und der Einrückposition, der Axialkraftspeicher 57 der Momenten-Aufbauanordnung 56 seine maximale Anpreßkraft erreicht hat, woraufhin das Anpreßmittel 80, durch das eine ungleich höhere Anpreßkraft aufzubringen ist, ohne Unterstützung durch die Momenten-Aufbauanordnung 56 wirksam ist.

Bedingt durch die Momenten-Aufbauanordnung 56 kann, aufgrund der mit deren Axialkraftspeicher 57 eingebrachten Elastizität, das gegenüber der Momenten-Aufbauanordnung 56 wesentlich unelastischere Anpreßmittel 80 mit den ebenfalls vergleichsweise unelastischen Reibflächen der Kupplungselemente 22, 24 relativ weich und gleichförmig in Wirkverbindung gebracht werden. Außerdem werden durch die Momenten-Aufbauanordnung 56 radiale und/oder axiale Toleranzen zwischen den Kupplungselementen 22, 24 ebenso wie eine eventuelle Welligkeit an deren Reibflächen in Umfangsrichtung ausgeglichen und dadurch der Nutzungsgrad dieser Reibflächen für die Momentenübertragung bei gleichzeitig reduzierten Flächenpressungen erhöht.

Bezüglich der Wirkung der Ausrück-Unterstützungsanordnung 52 ist folgendes festzuhalten: Bei das Anpreßmittel 80 in Richtung der Ausrückposition beaufschlagender Ausrück-Unterstützungsanordnung 52 übt diese eine Axialkraft auf das Anpreßmittel 80 aus, durch welche dasselbe von den Kupplungselementen 22, 24 fortgedrückt wird. Bei hinreichend großer durch die Ausrück-Unterstützungsanordnung 52 ausgeübter Axialkraft stellt sich bei einem Startvorgang unabhängig von den sich beim vorangehenden Stillstand eingestellten Befüllungsgraden zwischen Druckraum 86 und Kühlraum 28 und der dadurch bedingen Druckdifferenz eine Wirkrichtung am Anpreßmittel 80 ein, durch welche dieses beabstandet zu den Kupplungselementen 22, 24 gehalten ist und damit der Aufbau einer unerwünschten Drehmomentübertragung wirksam verhindert wird. Wichtig ist hierbei, dass die von der Ausrück-Unterstützungsanordnung 52 ausgeübte Axialkraft derart bemessen wird, dass das Anpressmittel 80 auch unter ungünstigen Einflüssen, wie bei einem Neustart in kalter Umgebung und daher zähflüssigem Kühlfluid und/oder mit fahrerseitig angeforderter hoher Drehzahl, stabil in seiner Ausrückposition gehalten ist. Von Vorteil ist eine derartige Ausführung aber auch dann, wenn aufgrund eines störungsbedingten Druckabfalles im entsprechenden Versorgungssystem der Kopplungsvorrichtung 3 die Ausrück-Unterstützungsanordnung 52 dafür sorgt, dass das Anpreßmittel 80 in einem Bereich zwischen Ausrückposition und Berührabschnitt, mit besonderem Vorzug sogar unmittelbar in der Ausrückposition gehalten ist.

Unter diesen Bedingungen erfolgt eine Auslenkung des Anpressmittels 80 aus seiner Ausrückposition nur dann, wenn im Druckraum 86 ein beträchtlich höherer Druck anliegt als im Kühlraum 28, da sowohl die durch den Druck im Kühlraum 28 bedingte Axialkraft als auch die gleichwirkende Axialkraft der Ausrück-Unterstützungsanordnung 52 überwunden werden muss. Dies wird nur dann der Fall sein, wenn über die dem Druckraum zugeordnete Steuerleitung 94 ein Überdruck im Druckraum 86 angelegt wird, welcher die Summe der beiden vorgenannten Axialkräfte übersteigt.

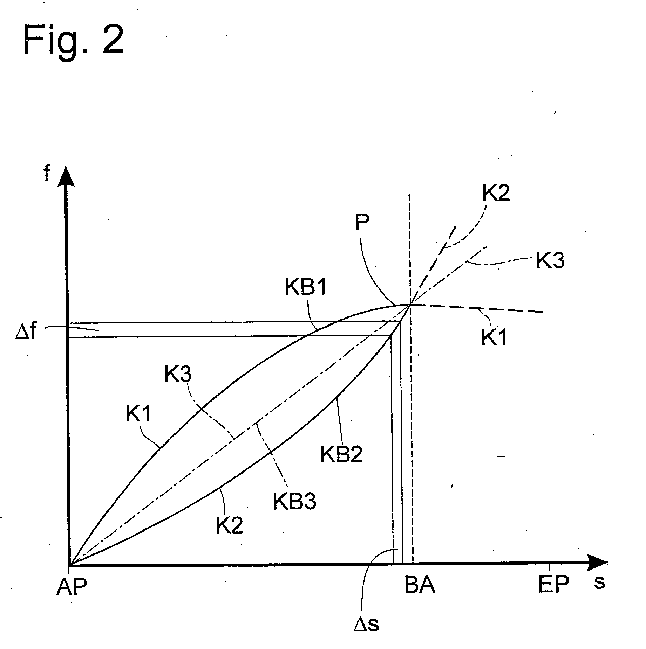

Sobald ein derartiger Überdruck im Druckraum 86 aufgebaut ist, setzt die bereits geschilderte Verlagerungsbewegung des Anpressmittels 80 in Richtung der Einrückposition ein. An der mit einem Axialkraftspeicher 54 versehenen Ausrück-Unterstützungsanordnung 52 wird der Axialkraftspeicher 54 infolge der Veriagerungsbewegung des Anpressmittels 80 immer weiter verformt, wobei der von diesem Axialkraftspeicher 54 dem Anpreßmittel 80 entgegengesetzte Widerstand entsprechend zunimmt. Aufgrund dieser Situation hat eine bestimmte Druckänderung Δp im Druckraum 86 immer eine zugeordnete, in Fig. 2 der Zeichnung dargestellte Axialkraftänderung Δf zur Folge, die eine Wegänderung As bei dem Anpreßmittel 80 auslöst. Hierdurch bedingt, ergibt sich eine exakte Zuordnung des jeweils im Druckraum 86 angelegten Überdruckes gegenüber dem im Kühlraum 28 vorherrschenden Druck in Relation zu der vom Anpreßmittel 80 zurückgelegten Wegänderung As, so dass die jeweilige Position des Anpreßmittels 80 stets bekannt und dadurch der Einrückvorgang insbesondere im Bereich zwischen dem Berührabschnitt BA und der Einrückposition EP, mithin also innerhalb desjenigen Bereiches, in welchem ein Aufbau der Drehmomentübertragung erfolgt, feinfühlig steuerbar und/oder regelbar ist. Im Gegensatz dazu kann der Bereich zwischen der Ausrückposition AP und dem Berührabschnitt BA vergleichsweise schnell durchfahren werden, da innerhalb dieses Bereiches keine Drehmomentübertragung statt findet.

Wie Fig. 2 der Zeichnung weiterhin zeigt, kann der Axialkraftspeicher 54 der Ausrück-Unterstützungsanordnung 52 mit degressiver Kennlinie K1 ausgelegt sein. Bei Auswahl des genutzten Kennlinienbereiches KB1 gemäß Kennlinie K1 steigt der vom Axialkraftspeicher 54 ausgeübte Widerstand, ausgehend von der Ausrückposition AP, in Richtung zum Berührabschnitt BA immer weiter an, um im axialen Erstreckungsbereich des Berührabschnittes BA oder unmittelbar benachbart zu demselben in einem der Maximalkraft zugeordneten Plateau P zu münden. Idealerweise ist der Kennlinienbereich KB1 derart ausgelegt, dass der dem Anpreßmittel 80 entgegenwirkende Widerstand des Axialkraftspeichers 54 im axialen Erstreckungsbereich des Berührabschnittes BA abzusinken beginnt, so dass die von dem Axialkraftspeicher 54 ausgeübte Anpreßkraft nach Passage dieses Erstreckungsbereichs in Richtung zur Einrückposition EP immer weiter absinkt, und dadurch immer weniger der sich gleichzeitig aufbauenden Drehmomentübertragung entgegenwirkt.

Alternativ hierzu kann aber auch ein Kennlinienbereich KB2 einer progressiven Kennlinie K2 des Axialkraftspeichers 54 ausgewählt sein, so dass der vom Axialkraftspeicher 54 gegenüber dem Anpreßmittel 80 ausgeübte, einer Verlagerungsbewegung desselben entgegenwirkende Widerstand, ausgehend von der Ausrückposition AP, nicht nur bis zum Berührabschnitt BA, sondern auch darüber hinaus, immer weiter ansteigt. Zwar wirkt dieser Axialkraftspeicher 54 zwischen dem Berührabschnitt BA und der Einrückposition EP dem Anstieg der Drehmomentübertragung mit nochmals zunehmender Axialkraft entgegen, jedoch ergibt sich der Vorteil bei Auswahl des Kennlinienbereiches KB2, dass, ausgehend von der Ausrückposition AP, mit zunehmender Annäherung an den Berührabschnitt BA eine immer stärkere Druckänderung Δp im Druckraum 86 und damit eine immer stärkere Axialkraftänderung Δf erforderlich ist, um eine immer kleinere Wegänderung As, also einen immer weiter absinkenden Weggradienten, bei dem Anpreßmittel 80 auszulösen. Dadurch ergibt sich, beginnend im Axialbereich des Berührabschnittes BA und in Richtung der Einrückposition noch stärker auswirkend, eine besonders feinfühlige Beeinflussung der axialen Position des Anpreßmittels 80.

Weiterhin zeigt Fig. 2 einen Axialkraftspeicher 54 mit einer zumindest im wesentlichen linearen Kennlinie K3 und einem Kennlinienbereich KB3 in strichlinierter Darstellung.

### Bezuctszeichenliste

- 1: Antriebsstrang
- 3: Kopplungsvorrichtung
- 5: Gehäuse
- 7: Befestigungselemente
- 9: Kopplungselement
- 10: Lagerzapfen
- 11: Antrieb
- 12: Zentrierführung
- 13: Kurbelwelle
- 14: Drehachse
- 15, 16: Gehäusenabe
- 18: Abtrieb
- 19: Getriebeeingangswelle
- 20,21: Gehäusewandungen
- 22: erste Kupplungselemente
- 23,25: Gehäuseschalen
- 24: zweite Kupplungselemente
- 28: Kühlraum
- 30: antriebsseitiger Kupplungselemententräger
- 32: abtriebsseitiger Kupplungselemententräger
- 34: erstes Deckblech
- 36: Eingangsteil
- 38: Torsionsschwingungsdämpfer
- 39: Energiespeicher
- 40: Kupplungsnabe
- 42: Ausgangsteil
- 44: Nabenscheibe
- 45,46: Axiallagerung
- 47: Stützwelle
- 49,50: Kanal
- 52: Ausrücker-Unterstützungsanordnung
- 54: Axialkraftspeicher
- 56: Momenten-Aufbauanordnung
- 57: Axialkraftspeicher
- 58: Sicke
- 60: Federzungen
- 61: Grundfederteil
- 62: Tellerfeder
- 64: Stützfläche
- 66: Bauteil
- 80: Anpressmittel
- 82: Kolben
- 84: Kupplungsorgan
- 86: Druckraum
- 90,92: Strömungsdurchlässe
- 94: Steuerleitung
- 96: Strömungsdurchgänge
- 98: Reibungskupplung

## Patentansprüche

1. Kopplungsvorrichtung, aufweisend ein mit einem Antrieb verbundenes Gehäuse, einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung, die als Kupplungsorgane wenigstens ein Anpressmittel und mindestens ein durch das Anpressmittel beaufschlagbares Kupplungselement aufweist, das ebenso wie das Anpressmittel in Achsrichtung begrenzt verlagerbar ist und wenigstens über eine Reibfläche und eine mit dem Abtrieb in Wirkverbindung stehende Kupplungsnabe verfügt, wobei beginnend in einem zwischen Einrückposition und Ausrückposition liegenden Berührabschnitt bis zum Erreichen der Einrückposition ein Drehmoment des Antriebs über das Gehäuse und die Reibungskupplung auf den Abtrieb übertragbar ist, während jenseits des Berührabschnittes bis zur Ausrückposition diese Drehmomentübertragung aufgehoben ist,
**dadurch gekennzeichnet,**
**dass** dem Anpressmittel (80) eine dasselbe in Richtung der Ausrückposition (AP) beaufschlagende Ausrück-Unterstützungsanordnung (52) zugeordnet ist.

2. Kopplungsvorrichtung nach Anspruch 1,
**dadurch gekennzeichnet,**
**dass** die Ausrück-Unterstützungsanordnung (52) mit einer Seite unmittelbar an dem Anpressmittel (80) und mit einer von demselben abgewandten anderen Seite an einem mit dem Antrieb (11) zumindest im wesentlichen in Umfangsrichtung bewegungsgleichen Bauteil (66) abgestützt ist.

3. Kopplungsvorrichtung nach Anspruch 2,
**dadurch gekennzeichnet,**
**dass** das die Ausrück-Unterstützungsanordnung (52) an ihrer vom Anpressmittel (80) abgewandten Seite abstützende Bauteil (66) einer den Abtrieb (18) gegenüber dem Gehäuse (5) zentrierenden antriebsseitigen Gehäusenabe (15) zugeordnet ist.

4. Kopplungsvorrichtung nach Anspruch 3,
**dadurch gekennzeichnet,**
**dass** die antriebsseitige Gehäusenabe (15) als Bauteil (66) über einen sich in Richtung der Ausrück-Unterstützungsanordnung (52) erstreckenden Radialvorsprung verfügt, der eine axiale Stützfläche (64) für die Ausrück-Unterstützungsanordnung (52) bereit stellt.

5. Kopplungsvorrichtung nach einem der Ansprüche 1 bis 4,
**dadurch gekennzeichnet,**
**dass** die Ausrück-Unterstützungsanordnung (52) einen Axialkraftspeicher (54) aufweist.

6. Kopplungsvorrichtung nach Anspruch 5,
**dadurch gekennzeichnet,**
**dass** der Axialkraftspeicher (54) über eine degressive Kennlinie (K1) verfügt, bei welcher derjenige Kennlinienbereich (KB1) genutzt wird, in welchem der vom Axialkraftspeicher (54) ausgeübte, einer Verlagerungsbewegung des Anpreßmittels (80) entgegenwirkende Widerstand, ausgehend von der Ausrückposition (AP), in Richtung zum Berührabschnitt (BA) ansteigt, um im unmittelbaren Erstreckungsbereich des Berührabschnittes (BA) in einem der Maximalkraft zugeordneten Plateau (P) zu münden, von welchem aus der dem Anpreßmittel (52) entgegenwirkende Widerstand wieder absinkt.

7. Kopplungsvorrichtung nach Anspruch 5,
**dadurch gekennzeichnet,**
**dass** der Axialkraftspeicher (54) über eine progressive Kennlinie (K2) oder eine zumindest im wesentlichen lineare Kennlinie (K3) verfügt, bei welcher derjenige Kennlinienbereich (KB2; KB3) genutzt wird, in welchem der vom Axialkraftspeicher (52) ausgeübte, einer Verlagerungsbewegung des Anpreßmittels (80) entgegenwirkende Widerstand, ausgehend von der Ausrückposition (AP), in Richtung zum Berührabschnitt (BA) ansteigt, und auch nach Überschreitung des Berührabschnittes (BA), in Richtung zur Einrückposition (EP) weiterhin ansteigend ist.

8. Kopplungsvorrichtung nach einem der Ansprüche 1 bis 7,
**dadurch gekennzeichnet,**
**dass** dem Anpressmittel (80) weiterhin eine dasselbe vom Kupplungselement (22) trennende Momenten-Aufbauanordnung (56) zugeordnet ist, welche mit Beginn der Drehmomentübertragung an dem Kupplungselement (22, 24) in Anlage kommt, und über welche das Kupplungselement (22, 24) in Richtung der Einrückposition (EP) des Anpreßmittels (80) beaufschlagbar ist.

9. Kopplungsvorrichtung, aufweisend ein mit einem Antrieb verbundenes Gehäuse, einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung, die als Kupplungsorgane wenigstens ein Anpressmittel und mindestens ein durch das Anpressmittel beaufschlagbares Kupplungselement aufweist, das ebenso wie das Anpressmittel in Achsrichtung begrenzt verlagerbar ist und wenigstens über eine Reibfläche und eine mit dem Abtrieb in Wirkverbindung stehende Kupplungsnabe verfügt, wobei beginnend in einem zwischen Einrückposition und Ausrückposition liegenden Berührabschnitt bis zum Erreichen der Einrückposition ein Drehmoment des Antriebs über das Gehäuse und die Reibungskupplung auf den Abtrieb übertragbar ist, während jenseits des Berührabschnittes bis zur Ausrückposition diese Drehmomentübertragung aufgehoben ist,
**dadurch gekennzeichnet,**
**dass** dem Anpressmittel (80) eine dasselbe vom Kupplungselement (22) trennende Momenten-Aufbauanordnung (56) zugeordnet ist, welche zur Einleitung der Drehmomentübertragung an dem Kupplungselement (22) in Anlage kommt, und über welche das Kupplungselement (22) in Richtung der Einrückposition (EP) des Anpreßmittels (80) beaufschlagbar ist.

10. Kopplungsvorrichtung nach Anspruch 9,
**dadurch gekennzeichnet,**
**dass** die Momenten-Aufbauanordnung (56) für eine erheblich geringere Anpreßkraft ausgelegt ist als das Anpreßmittel (80), so dass nach Kontaktherstellung der Momenten-Aufbauanordnung (56) mit dem Kupplungselement (22) bei fortgesetztem Einrückvorgang zunächst die Momenten-Aufbauanordnung (56) eine Verformung bis zum Erreichen einer der Momenten-Aufbauanordnung (56) zugeordneten Maximalkraft erfährt, und danach bei weiter fortgesetztem Einrückvorgang und **dadurch** bedingter, weiter ansteigender Belastung des Anpreßmittels (80) eine Steigerung von dessen Anpreßkraft in Richtung zur Einrückposition zur Erhöhung der Drehmomentübertragung bis auf das vorgegebene Maß bewirkt wird.

11. Kopplungsvorrichtung nach Anspruch 8, 9 oder 10,
**dadurch gekennzeichnet,**
**dass** die Momenten-Aufbauanordnung (56) einen Axialkraftspeicher (57) aufweist.
